# EUROPÄISCHE PATENTSCHRIFT

(11) **EP 2 444 691 B1**
(45) Veröffentlichungstag und Bekanntmachung des Hinweises auf die Patenterteilung: **05.06.2013**
(21) Anmeldenummer: 10188636.4
(22) Anmeldetag: 25.10.2010
(51) Int. Cl.: F16G 11/00, A63B 9/00

(54) **Seilkreuzung sowie Seilspielgerät und Verfahren zur Herstellung einer Seilkreuzung und Vorrichtung zur Durchführung des Verfahrens**
Rope crossing and rope toy and method for manufacturing a rope crossing and device for executing the method
Croisement de cordes ainsi qu'appareil de jeu à cordes et procédé de fabrication d'un croisement de cordes et dispositif destiné à la réalisation du procédé

(43) Veröffentlichungstag der Anmeldung: 25.04.2012
(73) Patentinhaber: Berliner Seilfabrik GmbH & Co., 13407 Berlin (DE)
(72) Erfinder: Köhler, Karl-Heinz, 13467 Berlin (DE)
(74) Vertreter: Gulde Hengelhaupt Ziebig & Schneider

(56) Entgegenhaltungen:
- EP-A1- 0 017 837
- WO-A1-2008/031877
- GB-A- 618 940
- US-A- 686 232
- US-A- 3 961 011

## Beschreibung

Die vorliegende Erfindung betrifft eine Seilkreuzung zur Fixierung von Seilsträngen aneinander sowie ein Seilspielgerät, welches wenigstens eine erfindungsgemäße Seilkreuzung umfasst. Weiterhin betrifft die Erfindung ein Verfahren zur Herstellung einer erfindungsgemäßen Seilkreuzung und eine Vorrichtung, mit der das erfindungsgemäße Verfahren zur Herstellung der Seilkreuzung durchführbar ist.

Insbesondere bei sogenannten Seilspielgeräten, die ein räumliches Netzwerk aus Seilen umfassen, ist es notwendig, dass die Position und die Verbindung von zwei sich kreuzenden Seilen auch während des Spiel- bzw. Kletterbetriebs aufrecht erhalten bleibt, um die Sicherheit der kletternden Kinder zu gewährleisten sowie um das räumliche Seilnetzwerk in seiner Form beizubehalten.

Zu diesem Zweck sind sogenannte Kleeblattringe bekannt zum Beispiel EP 0017 837, WO 2008/031877, GB618940, durch die zwei Schlaufen bzw. Buchten von Seilen derart durchgeführt werden, dass sie sich im Ring kreuzen und die sich an die Buchten anschließenden Seilstrangabschnitte an gegenüberliegenden Seiten des Ringes verlaufen. Eine Fixierung des Kreuzungspunktes wird dabei insbesondere durch den mittels des Ringes realisierten Umschlingungswinkels zwischen den Seilstrangabschnitten im Kreuzungspunkt erreicht. Je größer dabei die Sicherheit gegen unbeabsichtigte Verschiebung des Kreuzungspunktes sein soll, umso größer wird bei herkömmlichen Kleeblattringen der Umschlingungswinkel gestaltet. Das heißt, dass zur Realisierung eines sicheren Kreuzungspunktes relativ breite Kleeblattringe verwendet werden, oder zusätzliche Sicherungselemente zur form-und/oder kraftförmigen Blockierung einer unbeabsichtigten Verschiebebewegung des Kleeblattringes eingesetzt werden.

Der Erfindung liegt die Aufgabe zugrunde, eine Seilkreuzung sowie ein Verfahren und eine Vorrichtung zur Herstellung der Seilkreuzung zur Verfügung zu stellen, die mit geringen Material- und/oder Produktionskosten eine sichere und störunanfällige kreuzweise Fixierung von aneinander anliegenden Seilsträngen gewährleistet.

Diese Aufgabe wird anhand der erfindungsgemäßen Seilkreuzung nach Anspruch 1 gelöst. Vorteilhafte Ausgestaltungen der Seilkreuzung sind in den Unteransprüchen 2 bis 4 angegeben.

Ein Seilspielgerät, welches wenigstens eine und vorteilhafterweise mehrere der erfindungsgemäßen Seilkreuzungen umfasst, ist im Nebenanspruch 5 angegeben.

Ein Verfahren zur Herstellung einer erfindungsgemäßen Seilkreuzung ist im nebengeordneten Anspruch 6 angegeben, an den sich vorteilhafte Ausgestaltungen des Verfahrens gemäß den Unteransprüchen 7 bis 9 anschließen.

Eine Vorrichtung zur Durchführung des erfindungsgemäßen Verfahrens und somit zur Herstellung der erfindungsgemäßen Seilkreuzung ist im nebengeordneten Anspruch 10 angegeben, wobei sich vorteilhafte Ausgestaltungen dieser Vorrichtung in den Unteransprüchen 11 bis 15 anschließen.

Es wird erfindungsgemäß eine Seilkreuzung zur Fixierung von Seilsträngen aneinander zur Verfügung gestellt, die wenigstens zwei sich kreuzende Seilstränge und einen Ring umfasst, wobei der Ring eine innere Öffnung aufweist, die in Bezug zur Anzahl der zu fixierenden Seilstränge eine doppelte Anzahl von im Wesentlichen radial verlaufenden Aufnahmebereichen umfasst und in jeweils zwei sich gegenüberliegenden Aufnahmebereichen jeweils ein Strangabschnitt eines eine Bucht ausbildenden Seilstranges aufgenommen ist, so dass die Buchten sich kreuzender Seilstränge auf jeweils gegenüber liegenden Seiten des Ringes angeordnet sind. Erfindungsgemäß ist das Verhältnis der lichten Weite LW eines Aufnahmebereiches zum Durchmesser des Seilstranges D, der die Bucht in diesem Aufnahmebereich ausbildet, LW/D = 0,8 bis 0,98. Das heißt, dass die lichte Weite LW des Aufnahmebereiches um einen gewissen Prozentsatz kleiner ist als der Durchmesser des Seilstranges, der die Bucht in diesem Aufnahmebereich ausbildet. Dadurch wird erreicht, dass eine derart große Haftreibung zwischen dem Ring und insbesondere dem Aufnahmebereich einerseits und dem Seilstrang andererseits besteht, dass eine feste Fixierung des Ringes auf den beiden sich im Ring kreuzenden Seilsträngen realisiert ist.

Der Ring umgreift dabei die Buchten der beiden Seilstränge. Unter einer Bucht wird dabei eine einfache, offene Tauwerkschlaufe verstanden, das heißt, ein u-förmiger Verlauf eines Seilstranges. Die innere Öffnung des Ringes entspricht in ihrer Kontur in etwa der einer vierblättrigen Kleepflanze. Die Aufnahmebereiche der inneren Öffnung dienen somit zur Aufnahme von Seilstrangabschnitten. In gegenüber liegenden Aufnahmebereichen wird jeweils ein Seilstrang bzw. dessen Bucht angeordnet. Die Aufnahmebereiche weisen im Wesentlichen die Form eines Katenoides auf, wobei der Scheitelbereich vorzugsweise durch einen Halbkreis beschrieben ist, an den sich lineare Wandabschnitte, vorzugsweise parallel zueinander, anschließen. Die Erfindung ist jedoch nicht auf eine derartige Form des Aufnahmebereiches eingeschränkt, sondern es ist auch möglich, dass diese Aufnahmebereiche konkav verlaufende Bereiche sind, wobei sich die Seilstrangabschnitte einseitig zumindest bereichsweise an diese konkav verlaufenden Bereiche anlegen. Die lichte Weite des Aufnahmebereiches ist der maximale Abstand der beiden Wandabschnitte, die vorzugsweise linear zueinander verlaufen und einen Abschnitt des jeweiligen Aufnahmebereiches ausbilden. Bei zueinander parallelen Wandabschnitten und einem sich anschließenden halbkreisförmigen Scheitelbereich ist die lichte Weite des Aufnahmebereiches somit der Durchmesser des Halbkreises des Scheitelbereichs.

Der Ring verläuft vorzugsweise in einer Ebene, in der auch die innere Öffnung angeordnet ist. Die Symmetrieachse des Ringes sowie auch die Längsachse der inneren Öffnung, die bevorzugt miteinander übereinstimmen, verlaufen somit senkrecht zur Ebene des Ringes. Die Buchten der Seilstränge befinden sich im fixierten Zustand auf den jeweils gegenüber liegenden Seiten des Ringes und vorteilhafterweise zumindest teilweise außerhalb der Ringebene. Die äußere Form ist in bevorzugter Ausgestaltung der Form der inneren Öffnung angepasst, so dass die Kontur der äußeren Form einer skalierten Kontur der inneren Form entspricht. In einer alternativen Ausführungsform kann der Ring an seiner Außenseite auch eine Kreisringform aufweisen. Der Ring ist vorzugsweise ein Aluminiumlegierungs-Gesenkschmiedeteil.

Der Vorteil der erfindungsgemäßen Seilkreuzung ist, dass zwischen dem Ring und einem jeweils darin aufgenommenen Seilstrang im Aufnahmebereich aufgrund der Elastizität des Seilstranges und, wenn auch im geringeren Anteil, des Ringes, eine Druckspannung zwischen Ring und Seilstrang existiert, die derart Reibung erzeugt, dass die Seile im Kreuzungspunkt oder auch im Punkt der Anlage der Seilstränge aneinander fixiert sind. Bei der bevorzugten Verwendung üblicherweise für Seilspielgeräte genutzter Seile mit Metall-Anteil sind die die Fixierung bewirkenden Reibkräfte derart stark, dass ein Verrutschen des Kreuzungspunktes auf einem der Seilstränge zumindest unter normaler, beim Klettern auf dem Seilspielgerät herrschender Belastung und unter Einbeziehung einer ausreichend hohen Sicherheit verhindert wird.

Der Ring der erfindungsgemäßen Seilkreuzung kann mit einem geringeren Materialaufwand als herkömmliche Kleeblattringe gefertigt werden, da die lichte Weite der Aufnahmebereiche geringer ist als bei herkömmlichen Ringen, so dass auch der äußere Durchmesser des Ringes kleiner gehalten werden kann. Es muss weiterhin kein zusätzliches Element auf einem oder beiden Seilsträngen angeordnet werden, um ein Verrutschen des Kreuzungspunktes zu verhindern. Daraus ist ersichtlich, dass erfindungsgemäß weniger Material zur Verfügung gestellt werden muss sowie auch bei der Herstellung und Montage des erfindungsgemäßen Seilkreuzungspunktes ein geringerer Aufwand zu betreiben ist, um eine sichere und kostengünstige Fixierung einer Seilkreuzung zur Verfügung zu stellen. Es werden aus den Druckspannungen zwischen dem Ring und dem jeweiligen Seilstrang sowie aus der Druckspannung zwischen den Seilsträngen selbst die Reibkräfte generiert, die die Fixierung der Seilstränge aneinander bewirken. Der Umschlingungswinkel, der durch die jeweiligen Buchten ausgebildet wird, ist nicht mehr der entscheidende Faktor für die Fixierung der Seilstränge, so dass erfindungsgemäß auch Seilstränge aneinander fixiert werden können, die im Seilkreuzungspunkt einen relativ geringen Winkel der Seilstrangabschnitte aufweisen. Somit ergibt sich durch die erfindungsgemäße Seilkreuzung die Möglichkeit, eine sichere Verbindung in Seilnetzwerken zur Verfügung zu stellen, in denen sich einzelne Seilstränge mit einem relativ geringen Winkel kreuzen.

Versuche haben ergeben, dass das Verhältnis der lichten Weite LW eines Aufnahmebereiches zum Durchmesser des Seilstranges D, der die Bucht in dieser Aussparung ausbildet, LW/D = 0,9 bis 0,92 betragen sollte. So ist z.B. die lichte Weite LW = 17 mm, wenn der Durchmesser des Seiles D = 18 mm beträgt.

Vorzugsweise kreuzen sich die Seilsträge im Wesentlichen im Zentrum des Ringes und in der Ebene des Ringes. Das heißt, dass sich der Punkt der Kontaktierung der Innenseiten der Buchten der Seilstränge auch im Zentrum der inneren Öffnung des Ringes sowie im Projektionsbereich der Wandung des Ringes senkrecht zur Symmetrieachse und/oder zur Längsachse der inneren Öffnung befindet.

In weiterer vorteilhafter Ausgestaltung der erfindungsgemäßen Seilkreuzung ist vorgesehen, dass die Seilstränge jeweils einen Metallanteil aufweisen. Vorzugsweise ist dieser Metallanteil durch eine zentrale Litze mit Metallanteil -in Form eines Drahtseils im Seilstrang ausgebildet. Diese Metall-Litze kann ggf. mit Nylon-Litzen, die gegebenenfalls auch einen Metallanteil haben können, umwickelt sein. Die Metall-Litze kann den Kern des Seilstranges ausbilden oder eine Litze sein, die einen Metallanteil hat und um den Kern gewickelt ist. Alternativ lässt sich statt einer Metall-Litze auch eine Polypropylen-Litze verwenden. Wenn der Seilstrang die erwähnte bevorzugte Metall-Litze aufweist, kann diese derart stark ausgeführt sein, dass bis zu 25% der Querschnittsfläche des Seilstranges durch den Metallanteil ausgebildet ist.

Durch die Verwendung von Metall-Litzen ist sichergestellt, dass die Seilstränge jeweils ein insgesamt relativ hohes Elastizitätsmodul aufweisen, so dass entsprechende, durch die geringe lichte Weite der Aufnahmebereiche hergestellte Einschnürungen in den Seilsträngen entsprechend starke Reaktions-Normalkräfte bewirken, die in Abhängigkeit vom verwendeten Material des Ringes sowie der Seilstränge entsprechend große Reibkräfte bewirken.

Erfindungsgemäß wird außerdem ein Seilspielgerät zur Verfügung gestellt, welches insbesondere ein Seilklettergerät sein kann und wenigstens eine erfindungsgemäße Seilkreuzung umfasst. Das Gerüst des Seilspielgerätes kann z.B. die Form eine der platonischen Formen aufweisen, in dem, vorzugsweise skaliert, ebenfalls die Form des Gerüstes nachbildend Seile oder Seilstränge in einem räumlichen Netzwerk gehalten oder gespannt sind, die zum Beklettern dienen und/oder Seile oder ähnliches halten, die wiederum beklettert werden können. Durch die erfindungsgemäßen Seilkreuzungen kann sichergestellt werden, dass keine unbeabsichtigte Verschiebung eines Seilkreuzungspunktes stattfindet und somit die Gefahr beim Beklettern gemindert wird und die Form sowie der Aufbau des räumlichen Seilnetzwerkes beibehalten bleibt.

Des Weiteren wird erfindungsgemäß ein Verfahren zur Herstellung einer erfindungsgemäßen Seilkreuzung zur Verfügung gestellt, bei dem ein erster Seilstrang so durch den Ring hindurch geführt wird, dass er eine erste Bucht ausbildet, die an einer ersten Seite des Ringes angeordnet ist, und ein zweiter Seilstrang derart an der ersten Seite des Ringes entlang geführt wird, dass er von der ersten Bucht umgeben oder umgebbar ist, und, wenn der zweite Seilstrang von der ersten Bucht umgeben ist, der Ring und die erste Bucht derart einander angenähert werden, bis sich ein Punkt der Anlage der Seilstränge aneinander im Wesentlichen in der Ebene des Ringes befindet.

Wenn eine erste Bucht ausgebildet ist, die an einer ersten Seite des Ringes angeordnet ist, dann sind die sich an die erste Bucht anschließenden Abschnitte des ersten Seilstranges an der zweiten, der ersten Seite gegenüber liegenden Seite des Ringes angeordnet. Umgebbar ist der zweite Seilstrang dann von der ersten Bucht, wenn der zweite Seilstrang schon an der ersten Seite des Ringes entlang geführt wird und der erste Seilstrang noch gar keine erste Bucht ausgebildet hat, sondern erst nach Anordnung des zweiten Seilstranges an der ersten Seite des Ringes die erste Bucht ausbildet. Wenn der zweite Seilstrang von der ersten Bucht umgeben ist, kreuzen sich die beiden Seilstränge. Bei Annäherung des Ringes und der ersten Bucht verringert sich der Abstand zwischen der ersten Bucht und dem Ring. Der Punkt der Anlage der Seilstränge aneinander ist dabei der seilkreuzungsbedingte Kontaktierungspunkt der Seilstränge. Dieser Punkt der Anlage der Seilstränge aneinander ist vorzugsweise genau in der Mitte der Dicke bzw. der Ebene des Ringes, die dem Projektionsbereich des Ringes senkrecht zur Längsachse der inneren Öffnung entspricht. Bei der Durchführung des erfindungsgemäßen Verfahrens ist der erste Seilstrang in zwei Aufnahmebereichen angeordnet. Durch die Relativbewegung zwischen Ring und erster Bucht zieht sich der zweite Seilstrang in die verbleibenden Aufnahmebereiche der inneren Öffnung, deren Ausrichtung senkrecht ist zu den Aufnahmebereichen, in denen die Bucht des ersten Seilstranges angeordnet ist, so dass sich die Seilstränge vorzugsweise senkrecht zueinander kreuzen. Das Ergebnis davon ist, dass der erste Seilstrang eine erste Bucht ausbildet, die auf der ersten Seite des Ringes angeordnet ist, und der zweite Seilstrang eine zweite Bucht ausbildet, die auf der der ersten Seite gegenüber liegenden zweiten Seite des Ringes angeordnet ist. Die Abschnitte der Seilstränge, die die Buchten ausbilden, ragen aus der der jeweiligen Bucht gegenüber liegenden Seite des Ringes heraus. In einer bevorzugten Ausführungsform des Verfahrens ist vorgesehen, dass der zweite Seilstrang durch die erste Bucht hindurch gefädelt wird, so dass er von der ersten Bucht umgeben ist, bevor der Ring und die erste Bucht einander angenähert werden.

Die Annäherung von Ring und erster Bucht erfolgt vorzugsweise durch Einwirkung einer Druckkraft auf die erste Bucht. Das heißt, dass die Relativbewegung zwischen dem Ring und der ersten Bucht dadurch realisiert wird, dass eine Druckkraft auf die erste Bucht in Richtung des Ringes eingeleitet wird und der Ring in seiner Position fixiert wird. Dadurch erfolgt die Überwindung der zwischen dem Ring und den Seilsträngen auftretenden Reibkräfte. Eine Knickung des ersten Seilstranges ist nicht zu befürchten aufgrund der hohen Steifigkeit eines insbesondere für Seilspielgeräte verwendeten Seilstranges. Dies gilt ganz besonders bei vorzugsweise verwendeten Seilsträngen mit relativ hohem Metallanteil.

Die vorliegende Erfindung ist jedoch nicht auf die Aufbringung einer Druckkraft auf die erste Bucht eingeschränkt, sondern es kann alternativ auch vorgesehen sein, dass eine Einleitung einer Zugkraft in die beiden, die erste Bucht ausbildenden Seilstrangabschnitte bei gleichzeitiger Fixierung des Ringes erfolgt, so dass sich die erste Bucht in den Ring hineinzieht und dabei eine zweite Bucht im zweiten Seilstrang ausbildet.

Vorzugsweise folgt die Bewegung der ersten Bucht in Richtung des ersten Ringes derart weit, dass sich der Punkt der Anlage der Seilstränge aneinander im Wesentlichen in der Ebene des Ringes befindet.

In weiterer vorteilhafter Ausgestaltung ist vorgesehen, dass wenigstens ein Aufnahmebereich des Ringes in der Ebene des Ringes zusammengedrückt wird, so dass eine plastische Verformung erzeugt wird und die lichte Weite LW verringert wird. Dieser Verfahrensschritt wird bevorzugt nach Herstellung einer Seilkreuzung in der Ebene des Ringes durchgeführt, so dass nachträglich die Reibkräfte zwischen den Seilsträngen sowie zwischen einem jeweiligen Seilstrang und dem Ring erhöht werden. Bevorzugt werden dabei gegenüber liegende Aufnahmebereiche zusammengedrückt, so dass ein Seilstrang fester eingeklemmt wird als durch das bloße Einziehen in die jeweiligen Aufnahmebereiche.

Zur Durchführung des erfindungsgemäßen Verfahrens wird eine Vorrichtung zur Herstellung einer erfindungsgemäßen Seilkreuzung zur Verfügung gestellt, die eine Aufnahmeeinrichtung zur kraft- und/oder formschlüssigen Fixierung eines Ringes in wenigstens einem translatorischen Freiheitsgrad, eine erste kraftausübende Einrichtung, welche mit einer Bucht eines Seilstranges mechanisch in Wirkverbindung bringbar ist und mit der eine erste translatorische Bewegung der Bucht derart erzeugbar ist, dass sich der Scheitelpunkt der Bucht vom Ring entfernt, wobei die an die Bucht anschließenden Seilstrangabschnitte durch den Ring verlaufen, und eine zweite kraftausübende Einrichtung umfasst, welche mit der Bucht des Seilstranges mechanisch in Verbindung bringbar ist und mit der eine zweite translatorische Bewegung der Bucht derart erzeugbar ist, dass sich der Scheitelpunkt der Bucht dem Ring annähert. Die dabei erwähnte zweite translatorische Bewegung, die durch die zweite kraftausübende Einrichtung erzeugt wird, ist entgegengesetzt zur ersten translatorischen Bewegung ausgerichtet. Die beiden genannten translatorischen Bewegungen verlaufen bevorzugt in Richtung des blockierten translatorischen Freiheitsgrades des Ringes.

In vorteilhafter Ausführungsweise ist die erste kraftausübende Einrichtung ein Haken, der mit einer Zugvorrichtung der erfindungsgemäßen Vorrichtung mechanisch verbunden ist. Durch die Einleitung einer Zugkraft in den Haken kann sich der Haken, der in eine Bucht eingehakt ist, mitsamt der Bucht weggezogen werden, so dass die Bucht bzw. die sich an die Bucht anschließenden Seilstrangabschnitte durch den Ring gezogen werden und sich somit auf der ersten Seite des Ringes eine Bucht ausbildet, die groß genug ist, dass ein zweiter Seilstrang hindurch gefädelt werden kann.

In alternativer Ausführungsform könnte die erste kraftausübende Einrichtung auch eine Druckvorrichtung sein, mit der die erste Bucht durch den Ring gedrückt wird.

Die zweite kraftausübende Einrichtung ist vorzugsweise ein Stempel, der mit einer Druckvorrichtung mechanisch verbunden ist. Statt der genannten Druckvorrichtung könnte alternativ auch eine Zugvorrichtung verwendet werden, die z.B. an den Seilstrangabschnitten der Bucht ansetzt und die Bucht dem Ring annähert, so dass ein durch die Bucht gefädelter zweiter Seilstrang eine zweite Bucht ausbildend in den Ring hereingezogen wird.

Zur kostengünstigen Ausgestaltung der erfindungsgemäßen Vorrichtung ist vorgesehen, dass die Zugvorrichtung und/oder die Druckvorrichtung ein Spindeltrieb ist. Das heißt, dass die Zugvorrichtung und die Druckvorrichtung vorzugsweise durch dasselbe Getriebe, wie z.B. einem Spindeltrieb, ausgebildet sind. Dieser Spindeltrieb kann als erste kraftausübende Einrichtung eine Zugkraft auf eine Bucht ausüben und anschließend als zweite kraftausübende Einrichtung eine Druckkraft auf dieselbe Bucht ausüben. Alternative Ausgestaltungsmöglichkeiten wären andere Getriebeformen oder auch eine hydraulische oder pneumatische Einrichtung, mit der entsprechende Zug- und/oder Druckkräfte erzeugbar sind. Der Einsatz des vorzugsweise angewendeten Spindeltriebes realisiert in einfacher Weise eine derartige Zug- und/oder Druckkraft, die es ermöglicht, die Seilstränge trotz deren Übermaße der Durchmesser in die geringer bemessenen Aufnahmebereiche der inneren Öffnung zu ziehen bzw. zu drücken. Der Spindeltrieb umfasst neben einer Spindel einen Support, der auch als Gerüst oder Rahmen oder Träger bezeichnet werden kann und der zur Aufnahme der Spindel sowie deren Lagerung sowie zur Aufnahme der Reaktionskräfte bei belasteter Spindel dient. In diesem Support ist vorteilhafterweise auch eine Aufnahmeeinrichtung zur kraft- und/oder formschlüssigen Fixierung des Ringes angeordnet. Des Weiteren kann der Support derart ausgestaltet sein, dass durch einen relativ engen Bereich zur Aufnahme der Spindel und damit auch zur Aufnahme einer eingezogenen oder eingeschobenen Bucht eine Knickung der Bucht bei einer druckkraftbedingten Annäherung der Bucht an den Ring vermieden wird. Weiterhin kann der Support Griffe zur manuellen Haltung der Vorrichtung aufweisen. Der Spindeltrieb kann ggf. einen Motor als Antrieb aufweisen oder eine Kupplungsstelle zum Ansetzen eines Motors oder einer Handkurbel.

Insbesondere in der Ausgestaltung, in der die erste und die zweite kraftausübende Einrichtung durch denselben Spindeltrieb realisiert sind, ist der Haken derart am Stempel angeordnet, dass er aus einer zum Zug des Seiles geeigneten Position entfernbar ist. Vorteilhafterweise ist dabei der Haken an einer im Stempel verlaufenden Achse an dieser herum schwenkbar angeordnet, so dass er eine Zugposition geklappt werden kann und damit zwischen der der Bucht zugewandten Stempelseite und der Bucht angeordnet ist, so dass er in die Bucht eingreifen und diese ziehen kann. Aufgrund der Anordnung auf der Achse kann der Haken aber auch derart geschwenkt werden, dass er nicht mehr zwischen der der Bucht zugewandten Stempelseite und der Bucht angeordnet, so dass bei Verschiebung des Stempels in Richtung der Bucht vom Stempel eine Druckkraft auf die Bucht in Richtung des Ringes aufgebracht werden kann, ohne dass der Haken dabei stört.

Vorzugsweise umfasst die erfindungsgemäße Vorrichtung zur Herstellung einer Seilkreuzung wenigstens einen Antriebsmotor zum Antrieb der ersten und/oder der zweiten kraftausübende Einrichtung. In einer Ausgestaltung der Vorrichtung, in der die erste kraftausübende Einrichtung nicht durch dasselbe Aggregat wie die zweite kraftausübende Einrichtung realisiert ist, kann vorgesehen sein, dass jeweils ein Antriebsmotor für die erste und für die zweite kraftausübende Einrichtung angeordnet ist. Bevorzugt ist jedoch die erste und die zweite kraftausübende Einrichtung durch den Spindeltrieb realisiert, der mit einem Antriebsmotor antreibbar ist, wobei dieser vorzugsweise in seiner Drehrichtung umschaltbar ist, zur Realisierung der Zugbewegung und der Druckbewegung. In der Ausgestaltung mit Motor ist die erfindungsgemäße Vorrichtung somit ein speziell ausgestaltetes komplettes Linearmodul.

In einer alternativen Ausführungsform kann der Spindeltrieb eine Kurbel aufweisen oder zum Anschluss einer Kurbel ausgestaltet sein, so dass die erfindungsgemäße Seilkreuzung auch rein manuell herstellbar ist.

Die erfindungsgemäße Vorrichtung ist damit eine Einrichtung, die manuell an den Ort der herzustellenden Seilkreuzung gebracht werden kann und dort von einer Bedienperson gehalten und bedient werden kann. Somit eignet sich die erfindungsgemäße Vorrichtung für die Fertigung von Seilspielgeräten mit Seilkreuzungen sowie auch vorteilhaft für die Reparatur der Seilspielgeräte vor Ort.

Die vorliegende Erfindung wird im Folgenden der in den beiliegenden Zeichnungen dargestellten Ausführungsbeispiele beschrieben.

Es zeigt
- Figur 1: eine erfindungsgemäße Seilkreuzung in perspektivischer Ansicht,
- Figur 2: einen Ring in Draufsicht,
- Figur 3: eine erfindungsgemäße Seilkreuzung in Schnittdarstellung,
- Figur 4: einen Ring in abgewandelter Ausführungsform,
- Figuren 5 bis 13: eine erfindungsgemäße Vorrichtung zur Herstellung der erfindungsgemäßen Seilkreuzung in perspektivischer Ansicht mit jeweils unterschiedlichen Positionen einzelner Vorrichtungselemente und
- Figur 14: eine mittels der Vorrichtung hergestellte erfindungsgemäße Seilkreuzung.

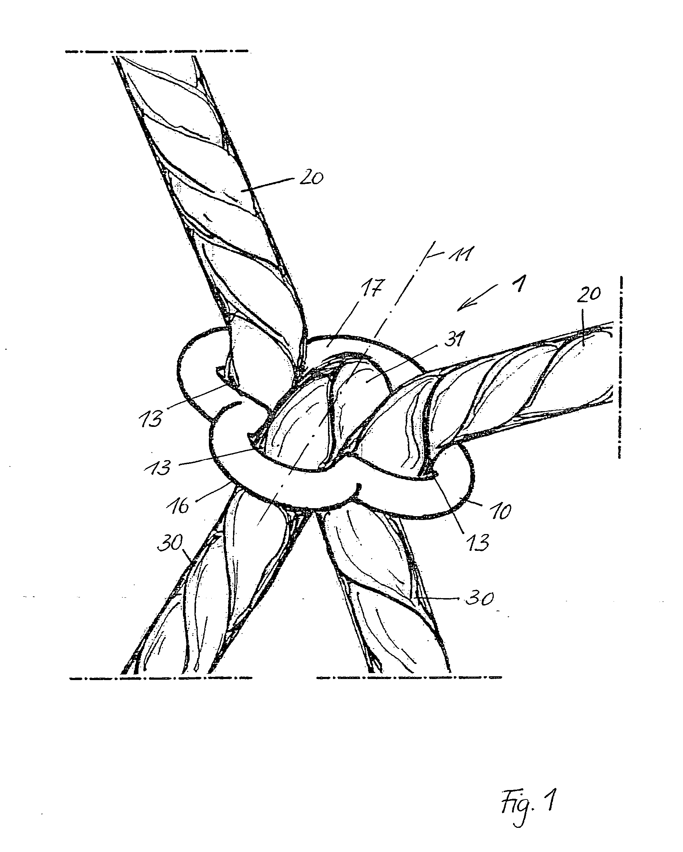

In Figur 1 ist eine erfindungsgemäße Seilkreuzung 1 dargestellt, wobei ersichtlich ist, dass diese Seilkreuzung 1 einen Ring umfasst, der im Wesentlichen eine einem vierblättrigen Kleeblatt angenäherte innere und äußere Kontur aufweist. Durch den Ring 10 verläuft ein erster Seilstrang 20 sowie ein zweiter Seilstrang 30. Die beiden Seilstränge 20, 30 kreuzen sich in der Mitte des Ringes 10. Dadurch bildet der erste Seilstrang 20 eine erste Bucht 21 (in Figur 1 nicht ersichtlich) und der zweite Seilstrang 30 eine zweite Bucht 31 aus. Die zweite Bucht 31 ist dabei an der zweiten Seite des Ringes 17 angeordnet. Die erste Bucht 21 ist an der der zweiten Seite 17 gegenüber liegenden Seite des Ringes 16 angeordnet. Durch den Verlauf der Seilstränge 20, 30 durch Aufnahmebereiche 13 in der inneren Öffnung 12 des Ringes 10 wird eine Kreuzung der Seilstränge 20, 30 gewährleistet.

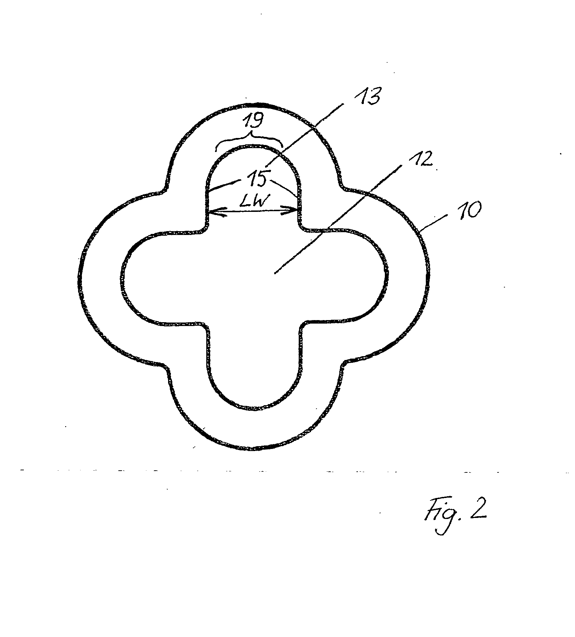

Aus Figur 2 ist die Form des Ringes 10 ersichtlich. Dieser weist zentral eine innere Öffnung 12 auf, die im Wesentlichen der Form eines Kreuzes entspricht. Die innere Öffnung 12 umfasst Aufnahmebereiche 13, die sich radial vom Zentrum des Ringes 10 erstrecken. Die Aufnahmebereiche 13 haben eine lichte Weite LW, die durch den Abstand linearer Wandabschnitte 15 zueinander definiert ist. Die linearen Wandabschnitte 15 sind mit einem konkaven Scheitelbereich 19 miteinander verbunden. Gegenüber liegende Aufnahmebereiche 13 dienen zur Aufnahme jeweils eines Seilstranges 20 oder 30.

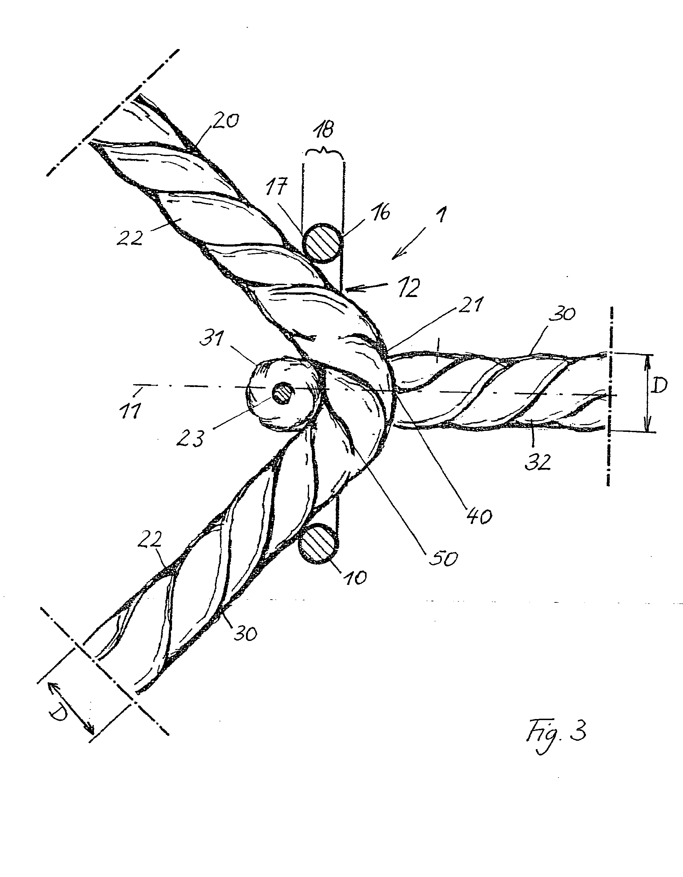

Insbesondere aus Figur 3 ist ersichtlich, dass, bedingt durch die Kreuzung der Seilstränge 20, 30 die jeweiligen Buchten 21 und 31 an gegenüber liegenden Seiten des Ringes, nämlich an der ersten Seite des Ringes 16 und an der zweiten Seite des Ringes 17, positioniert sind. Ein Kreuzungspunkt der Seilstränge 20, 30, bzw. ein Punkt 50 der Anlage der Seilstränge 20, 30 aneinander, befindet sich bei der erfindungsgemäßen Seilkreuzung möglichst in der Mitte der Ebene 18 des Ringes 10, so dass die beiden Buchten 21 und 31 der Seilstränge 20 und 30 möglichst gleich weit aus dem Ring 10 herausragen. Der Kreuzungspunkt 50, bzw. der Punkt der Anlage der Seilstränge aneinander, befindet sich vorzugsweise auf einer Symmetrieachse 11 der inneren Öffnung 12 des Ringes 10.

Die verwendeten Seilstränge 20, 30 weisen vorzugsweise, wie dargestellt im Kern, oder alternativ den Kern umwickelnd, wenigstens eine Metall-Litze 23 auf.

Der Durchmesser D des jeweiligen Seilstranges 20 oder 30, wie er aus Figur 3 ersichtlich ist, ist erfindungsgemäß etwas größer bemessen als die lichte Weite LW eines zur Aufnahme dieses Seilstranges dienenden Aufnahmebereiches 13, wie er insbesondere aus Figur 2 ersichtlich ist. Dadurch wird eine sehr starke Haftreibung zwischen dem jeweiligen Seilstrang 20, 30 und dem Ring 10 und zwischen den Seilsträngen 20, 30 erzeugt, die eine sichere Fixierung des Ringes 10 auf den Seilsträngen 20, 30 an der vorgesehenen Position bewirkt.

In Figur 3 ist zudem ersichtlich, dass die sich an die erste Bucht anschließenden Seilstrangabschnitte 22 zu der der ersten Bucht 21 gegenüber liegenden, zweiten Seite 17 des Ringes 10 erstrecken und die sich an die zweite Bucht 31 anschließenden Seilstrangabschnitte 32 zu der ersten Seite 16 des Ringes 10 erstrecken. Das heißt, dass sich der Scheitelpunkt 40 des ersten Seilstranges 20 auf der ersten Seite 16 des Ringes 10 befindet. Der Scheitelpunkt des zweiten Seilstranges 30 befindet sich auf der zweiten Seite 17 des Ringes 10.

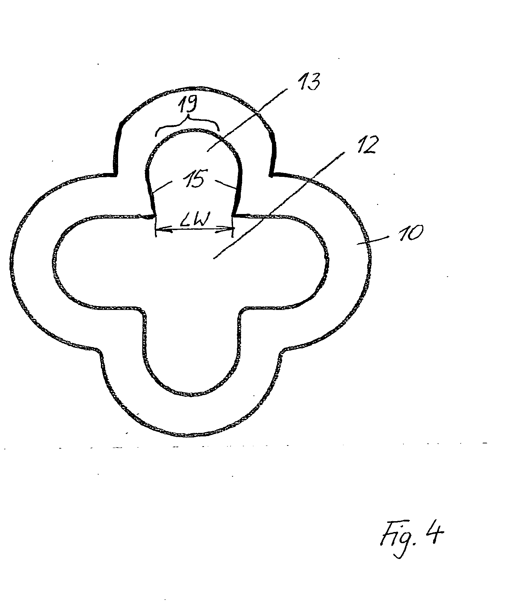

In einer Abwandlung des verwendeten Ringes 10 ist dieser, vorzugsweise wenn seine Aufnahmebereiche 13 bereits die Seilstränge 20 und 30 umfassen, in wenigstens einem Aufnahmebereich 13 derart zusammen gekniffen oder verformt, dass die lichte Weite LW geringer ist als der Durchmesser des Scheitelbereiches 19, wodurch eine Erhöhung der Normalkräfte zwischen den Seilsträngen 20, 30 und dem Ring 10 bewirkt wird, so dass noch größere Reibkräfte auftreten. Dabei muss der Ring 10 nicht unbedingt wie in Figur 4 nur in einem Aufnahmebereich 13 verformt sein, sondern vorzugweise ist er auch in dem gegenüber liegenden Aufnahmebereich derart verengt ausgeführt.

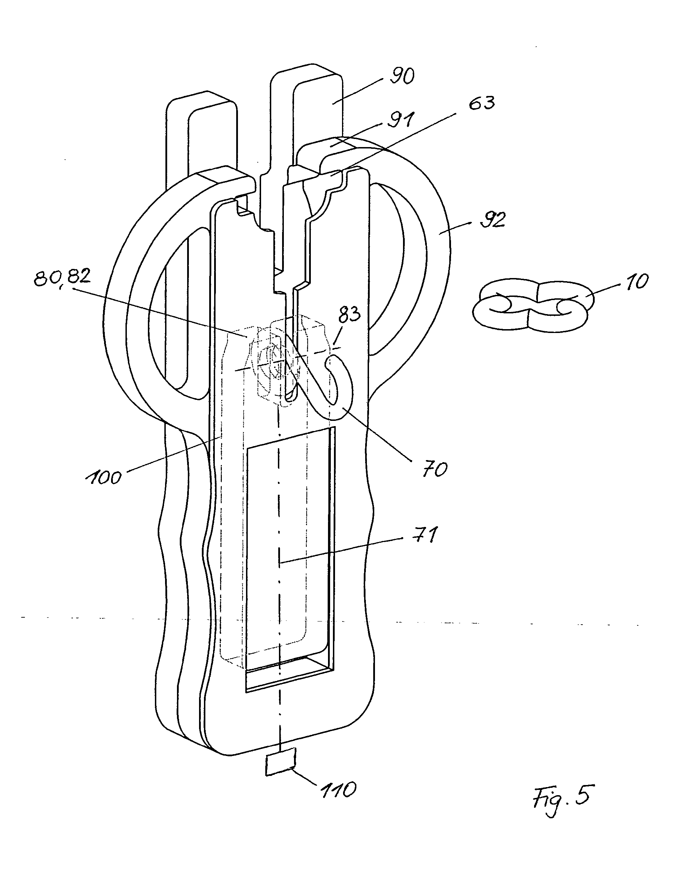

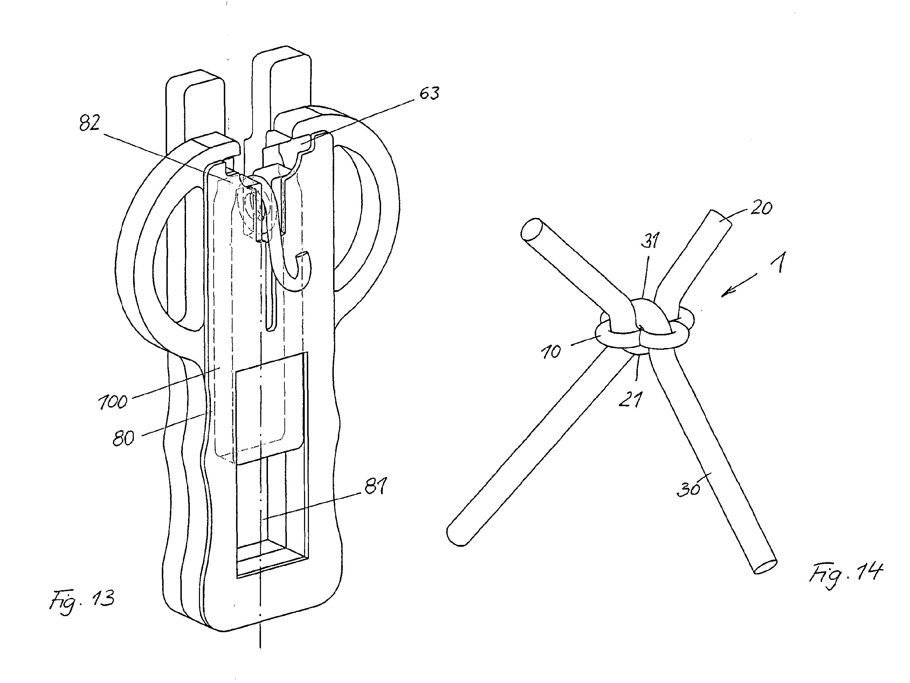

Zur Durchführung des erfindungsgemäßen Verfahrens wird eine Vorrichtung zur Verfügung gestellt, wie sie in den Figuren 5 bis 13 dargestellt ist. Diese Vorrichtung umfasst einen Support 90, der als Träger oder Gestell ausgebildet ist. Am Support 90 befinden sich stirnseitig Auflageflächen 91. Daran anschließend ist eine Aufnahmeeinrichtung 63 zur Aufnahme eines Ringes 10 angeordnet. Im oder am Support 90 ist ein Schlitten 100 vorgesehen, der mittels eines Spindeltriebes 71, der in den Figuren 5 bis 13 lediglich durch eine Strich-Punkt-Linie angedeutet ist, verschiebbar angeordnet ist. An den Spindeltrieb 71 ist an einem Ansatzpunkt 110 ein Motor oder eine Handkurbel angeschlossen (nicht dargestellt) oder anschließbar. Am Schlitten 100, der gestrichelt dargestellt ist, ist um eine Achse 83 schwenkbar eine erste kraftausübende Einrichtung in Form eines Hakens 70 angeordnet. Der Schlitten 100 umfasst gleichzeitig eine zweite kraftausübende Einrichtung in Form eines Stempels 80, dessen Druckfläche 82 der Aufnahmeeinrichtung 63 zugeordnet ist. Zur manuellen Bedienbarkeit der Vorrichtung sind außerdem Griffe 92 am Support angeordnet.

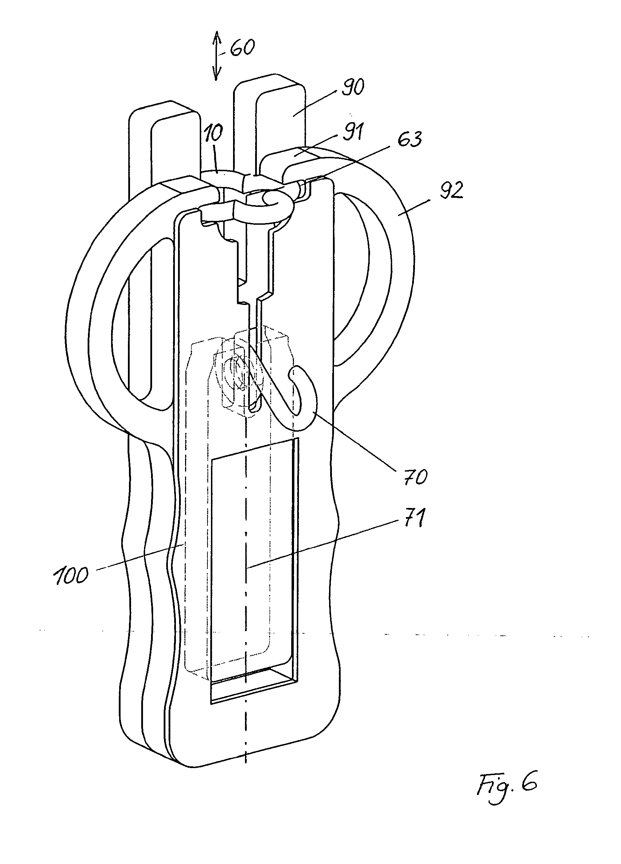

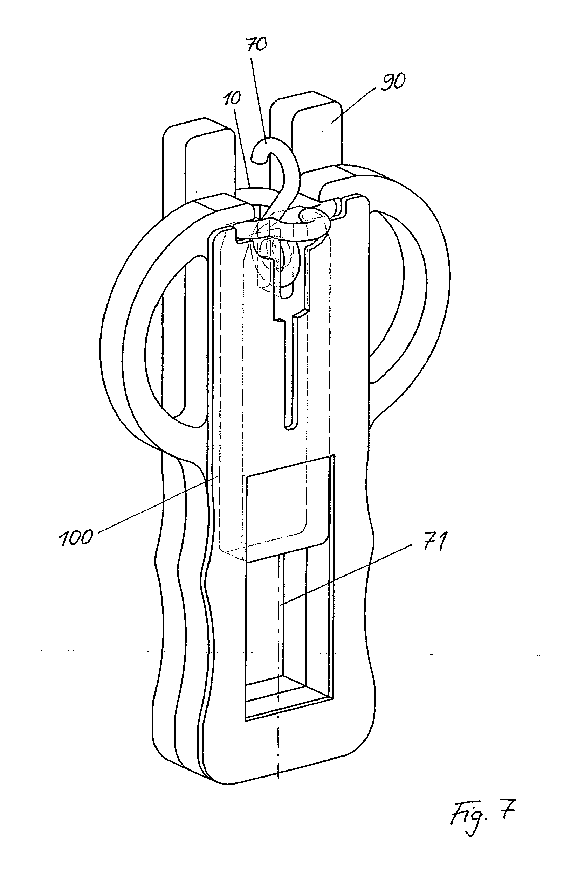

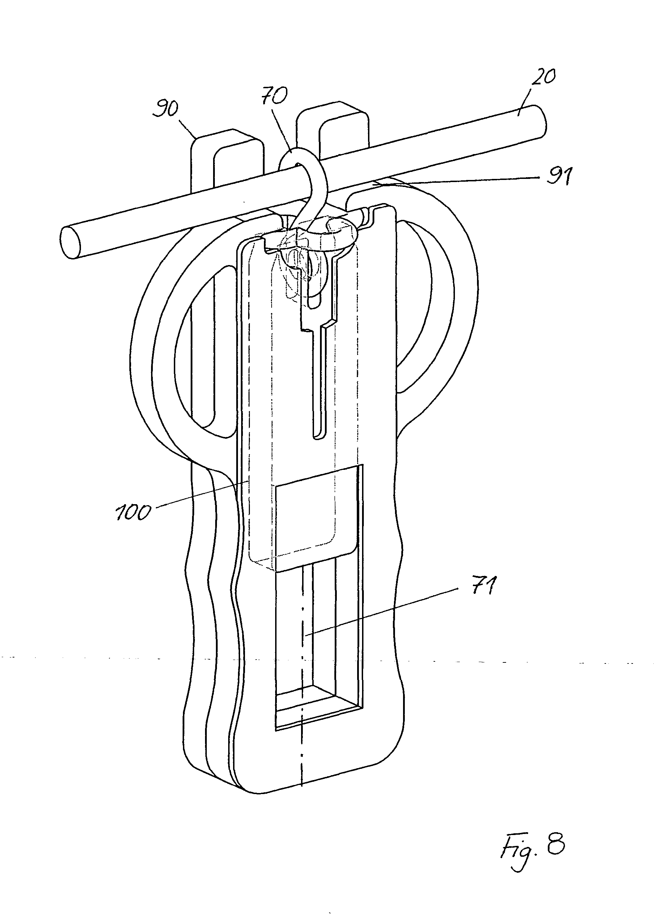

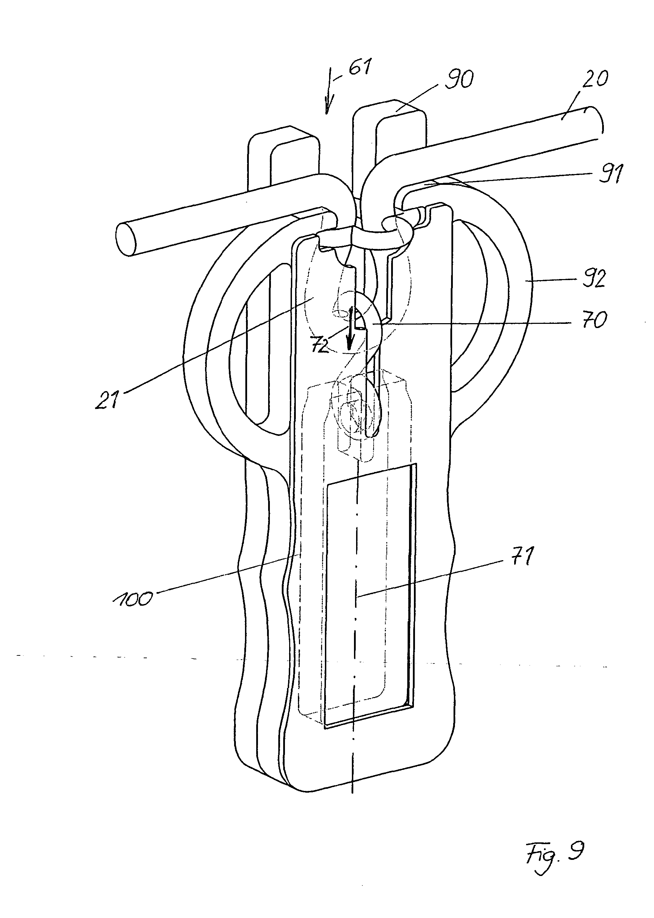

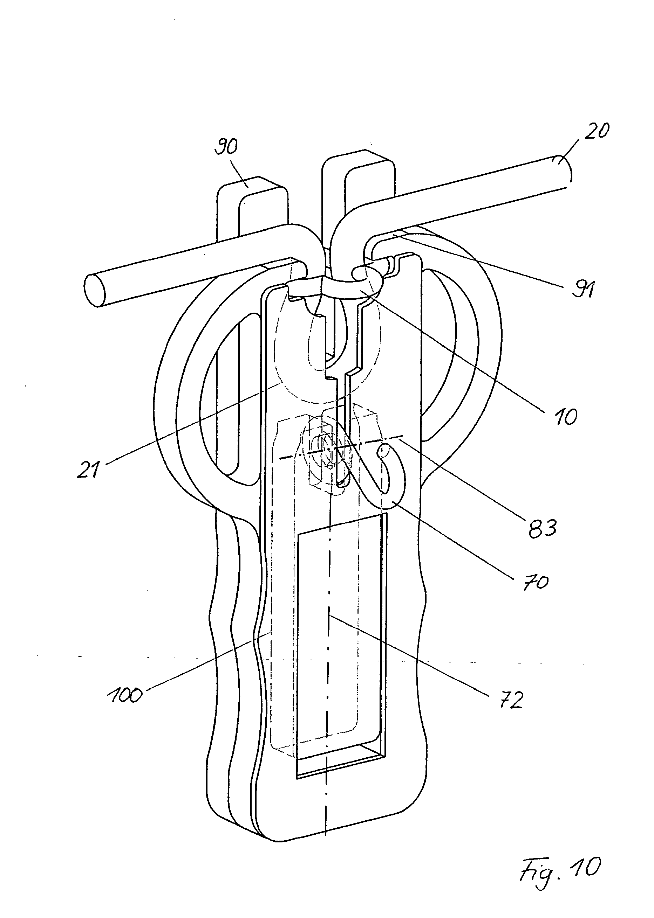

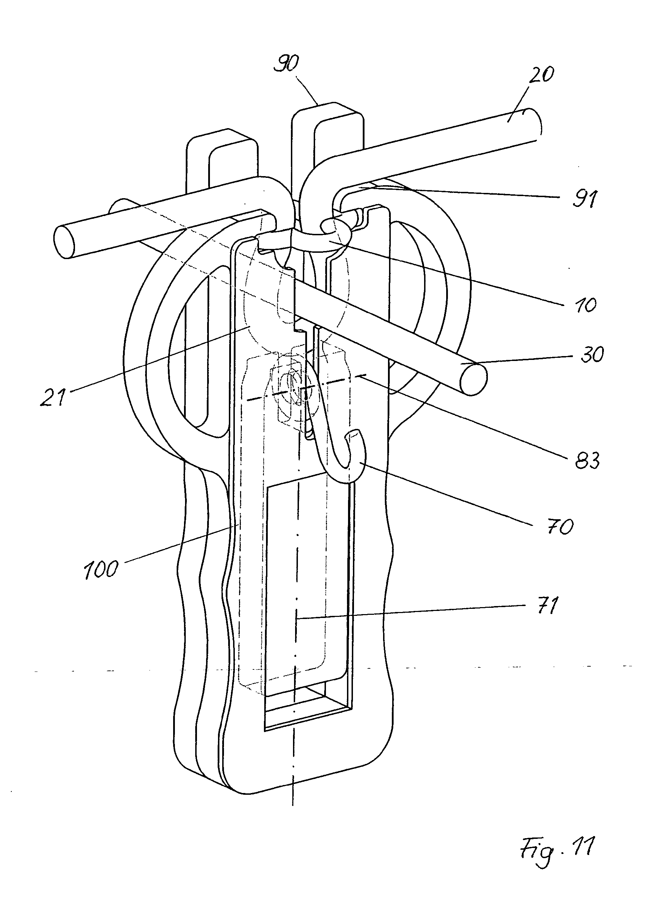

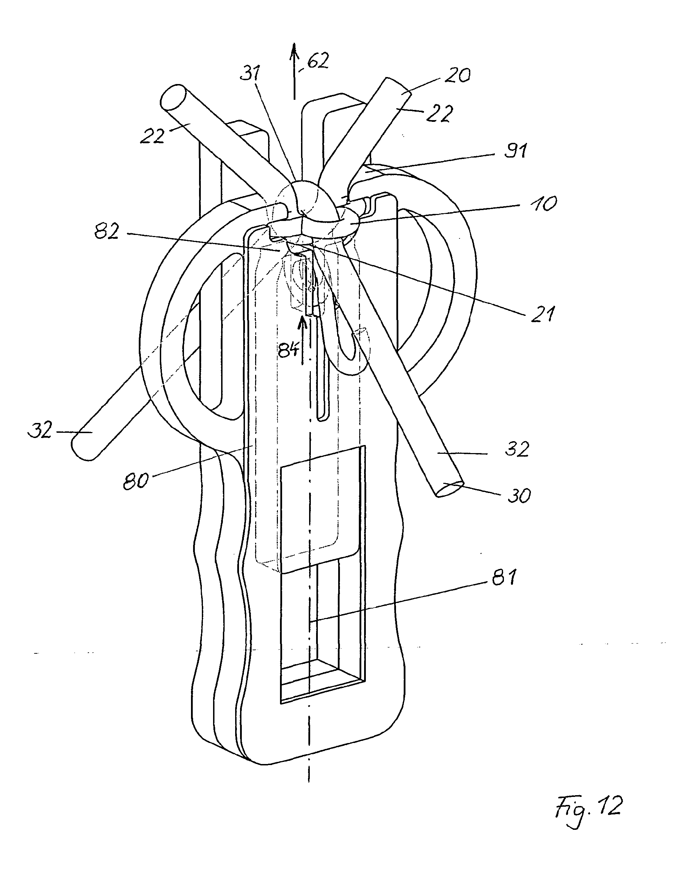

Das Verfahren zur Herstellung der erfindungsgemäßen Seilkreuzung mittels der erfindungsgemäßen Vorrichtung wird im Folgenden anhand der Figuren 5 bis 13 beschrieben. Zunächst befindet sich der Schlitten 100 in einer derartigen Position, dass die Aufnahmeeinrichtung 63 frei ist. Der Ring 10, der in Figur 5 dargestellt ist, lässt sich wie in Figur 6 gezeigt in die Aufnahmeeinrichtung 63 einsetzen. Durch die Aufnahme des Ringes 10 in der Aufnahmeeinrichtung 63 wird der translatorische Freiheitsgrad 60 des Ringes 10 blockiert. Anschließend wird der Schlitten 100 in eine derartige Position gefahren, dass der herunter geklappte Haken 70 durch den Ring 10 hindurch ragt, wie in Figur 7 dargestellt. In dieser Position lässt sich, wie in Figur 8 gezeigt, ein erster Seilstrang 20 durch den Haken 70 schieben oder der erste Seilstrang 20 kann vom Haken 70 gegriffen werden. Wie in Figur 9 dargestellt, wird nun der Schlitten 100 durch Betätigung der Zugvorrichtung, die in Form des Spindeltriebes 71 vorhanden ist, vom Ring 10 entfernt, so dass eine vom Haken 70 bewirkte Zugkraft 72 den ersten Seilstrang 20 derart durch den Ring 10 zieht, dass sich eine erste Bucht 21 ausbildet. Das heißt, dass die erste Bucht 21 eine erste translatorische Bewegung 61 ausführt. Anschließend wird, wie in Figur 10 dargestellt, der Haken 70 um die Achse 83 herausgeklappt, so dass er nicht mehr in die erste Bucht 21 eingreift. Die erste Bucht 21 ist somit frei, so dass ein zweiter Seilstrang 30 durch die erste Bucht 21 und auch durch eine entsprechende Aussparung im Support 90 hindurch geschoben werden kann, wie in Figur 11 gezeigt. Danach wird der Schlitten 100, der nun als zweite kraftausübende Einrichtung bzw. als Stempel 80 funktioniert, mittels des Spindeltriebes 81 in Richtung des Ringes 10 gefahren, so dass seine Druckfläche 82 an der ersten Bucht 21 anliegt und diese in Richtung des Ringes 10 schiebt, wie es in Figur 12 dargestellt ist. Das heißt, dass die erste Bucht 21 eine zweite translatorische Bewegung 62 aufgrund der aufgebrachten Druckkraft 84 ausführt. Die beiden Seilstränge 20 und 30 kreuzen sich jetzt im Ring 10, wie in Figur 12 dargestellt.

Danach lässt sich der Schlitten 100 wieder etwas vom Ring 10 entfernen, so dass die hergestellte Seilkreuzung 1 der Vorrichtung entnommen werden kann.

### Bezugszeichenliste

| | |
|---|---|
| Seilkreuzung | 1 |
| | |
| Ring | 10 |
| Symmetrieachse | 11 |
| innere Öffnung | 12 |
| Aufnahmebereich | 13 |
| lichte Weite | LW |
| linearer Wandabschnitt | 15 |
| | |
| erste Seite des Ringes | 16 |
| zweite Seite des Ringes | 17 |
| Ebene des Ringes | 18 |
| Scheitelbereich | 19 |
| | |
| erster Seilstrang | 20 |
| erste Bucht | 21 |
| an erste Bucht anschließender Seilstrangabschnitt | 22 |
| Metall-Litze | 23 |
| | |
| zweiter Seilstrang | 30 |
| zweite Bucht | 31 |
| an zweite Bucht anschließender Seilstrangabschnitt | 32 |
| | |
| Seilstrangdurchmesser | D |
| Scheitelpunkt | 40 |
| | |
| Kreuzungspunkt, Punkt der Anlage der Seilstränge | 50 |
| | |
| translatorischer Freiheitsgrad | 60 |
| erste translatorische Bewegung der Bucht | 61 |
| zweite translatorische Bewegung der Bucht | 62 |
| Aufnahmeeinrichtung | 63 |
| | |
| erste kraftausübende Einrichtung, Haken | 70 |
| Zugvorrichtung, Spindeltrieb | 71 |
| Zugkraft | 72 |
| | |
| zweite kraftausübende Einrichtung, Stempel | 80 |
| Druckvorrichtung, Spindeltrieb | 81 |
| Druckfläche | 82 |
| Achse | 83 |
| Druckkraft | 84 |
| | |
| Support | 90 |
| Auflagefläche | 91 |
| Griff | 92 |
| | |
| Schlitten | 100 |
| | |
| Ansatzpunkt | 110 |

## Patentansprüche

1. Seilkreuzung zur Fixierung von Seilsträngen aneinander, umfassend wenigstens zwei sich kreuzende Seilstränge (20, 30) und einen Ring (10), wobei der Ring (10) eine innere Öffnung (12) aufweist, die in Bezug zur Anzahl der zu fixierenden Seilstränge eine doppelte Anzahl von im Wesentlichen radial verlaufenden Aufnahmebereichen (13) umfasst und in jeweils zwei sich gegenüberliegenden Aufnahmebereichen (13) jeweils ein Strangabschnitt eines eine Bucht (21, 31) ausbildenden Seilstranges (20, 30) aufgenommen ist, so dass die Buchten (21, 31) sich kreuzender Seilstränge auf jeweils gegenüberliegenden Seiten des Ringes (10) angeordnet sind,
**dadurch gekennzeichnet,**
**dass** das Verhältnis der lichten Weite LW eines Aufnahmebereiches zum Durchmesser des Seilstranges D, der die Bucht (21, 31) in diesem Aufnahmebereich ausbildet, LW/D = 0,8 bis 0,98 beträgt.

2. Seilkreuzung nach Anspruch 1, bei der das Verhältnis der lichten Weite LW einer Aussparung zum Durchmesser des Seilstranges D, der die Bucht in dieser Aussparung ausbildet, LW/D = 0,9 bis 0,92 beträgt.

3. Seilkreuzung nach Anspruch 1 oder 2, bei der sich die Seilstränge (20, 30) im Wesentlichen im Zentrum des Ringes (10) und in der Ebene des Ringes (18) kreuzen.

4. Seilkreuzung nach einem der vorhergehenden Ansprüche, bei der die Seilstränge (20, 30) jeweils einen Metallanteil aufweisen.

5. Seilspielgerät, insbesondere Seilklettergerät, umfassend wenigstens eine Seilkreuzung (1) nach wenigstens einem der Ansprüche 1 bis 4.

6. Verfahren zur Herstellung einer Seilkreuzung gemäß einem der Ansprüche 1 bis 4, bei dem ein erster Seilstrang (20) so durch den Ring (10) hindurchgeführt wird, dass er eine erste Bucht (21) ausbildet, die an einer ersten Seite des Ringes (16) angeordnet ist, und ein zweiter Seilstrang (30) derart an der ersten Seite des Ringes (16) entlang geführt wird, dass er von der ersten Bucht (21) umgeben oder umgebbar ist, und, wenn der zweite Seilstrang (30) von der ersten Bucht (21) umgeben ist, der Ring (10) und die erste Bucht (21) derart einander angenähert werden, bis sich ein Punkt der Anlage der Seilstränge (50) aneinander im Wesentlichen in der Ebene des Ringes (18) befindet.

7. Verfahren zur Herstellung einer Seilkreuzung nach Anspruch 6, bei dem der zweite Seilstrang (30) durch die erste Bucht (21) hindurch gefädelt wird, so dass er von der ersten Bucht (21) umgeben ist, bevor der Ring (10) und die erste Bucht (21) einander angenähert werden.

8. Verfahren zur Herstellung einer Seilkreuzung nach einem der Ansprüche 6 und 7, bei dem die Annäherung von Ring (10) und erster Bucht (21) durch Einwirkung einer Druckkraft (84) auf die erste Bucht (21) realisiert wird.

9. Verfahren zur Herstellung einer Seilkreuzung nach einem der Ansprüche 6 bis 8, bei dem wenigstens ein Aufnahmebereich (13) des Ringes (10) in der Ebene des Ringes (18) zusammengedrückt wird, so dass eine plastische Verformung erzeugt wird und die lichte Weite LW verringert wird.

10. Vorrichtung zur Herstellung einer Seilkreuzung gemäß einem der Ansprüche 1 bis 4, umfassend:
- eine Aufnahmeeinrichtung (63) zur kraft- und/ oder formschlüssigen Fixierung eines Ringes (10) in wenigstens einem translatorischen Freiheitsgrad (60),
- eine erste kraftausübende Einrichtung (70), welche mit einer Bucht eines Seilstranges mechanisch in Wirkverbindung bringbar ist und mit der eine erste translatorische Bewegung der Bucht (61) derart erzeugbar ist, dass sich der Scheitelpunkt (40) der Bucht vom Ring (10) entfernt, wobei die an die Bucht anschließenden Seilstrangabschnitte (22, 32) durch den Ring verlaufen,
- eine zweite kraftausübende Einrichtung (80), welche mit der Bucht des Seilstranges mechanisch in Wirkverbindung bringbar ist und mit der eine zweite translatorische Bewegung der Bucht (62) derart erzeugbar ist, dass sich der Scheitelpunkt (40) der Bucht dem Ring (10) annähert.

11. Vorrichtung zur Herstellung einer Seilkreuzung nach Anspruch 10, bei der die erste kraftausübende Einrichtung ein Haken (70) ist, der mit einer Zugvorrichtung (71) mechanisch verbunden ist.

12. Vorrichtung zur Herstellung einer Seilkreuzung nach einem der Ansprüche 9 bis 11, bei der zweite kraftausübende Einrichtung ein Stempel (80) ist, der mit einer Druckvorrichtung (81) mechanisch verbunden ist.

13. Vorrichtung zur Herstellung einer Seilkreuzung nach einem der Ansprüche 11 und 12, bei der die Zugvorrichtung (71) und/oder die Druckvorrichtung (81) ein Spindeltrieb ist.

14. Vorrichtung zur Herstellung einer Seilkreuzung nach einem der Ansprüche 12 und 13, bei der der Haken (70) am Stempel (80) angeordnet ist und aus einer zum Zug des Seilstranges geeigneten Position entfernbar ist.

15. Vorrichtung zur Herstellung einer Seilkreuzung nach einem der Ansprüche 9 bis 14, die wenigstens einen Antriebsmotor zum Antrieb der ersten und/oder der zweiten kraftausübenden Einrichtung aufweist.

## Claims

1. Rope crossing for securing rope lines to each other, comprising at least two crossing rope lines (20, 30) and a ring (10), wherein the ring (10) has an inner opening (12), which comprises twice the number of essentially radially extending receiving regions (13) in relation to the number of rope lines to be secured, and wherein a corresponding line segment of a rope line (20, 30) forming a bulge (21, 31) is received in two corresponding receiving regions (13) facing each other, so that the bulges (21, 31) of crossing rope lines are arranged on respective opposite sides of the ring (10),
**characterized in**
**that** the ratio of the unobstructed width LW of a receiving region to the diameter of the rope line D, which forms the bulge (21, 31) in this receiving region, is LW/D = 0.8 to 0.98.

2. Rope crossing according to claim 1, wherein the ratio of the unobstructed width LW of a recess to the diameter of the rope line D, which forms the bulge in this receiving region, LW/D = 0.9 to 0.92.

3. Rope crossing according to claim 1 or 2, wherein the rope lines (20, 30) cross essentially in the centre of the ring (10) and in the plane of the ring (18).

4. Rope crossing according to one of the preceding claims, wherein the rope lines (20, 30) each have a metal fraction.

5. Rope play equipment, in particular rope climbing equipment, comprising at least one rope crossing (1) according to at least one of the claims 1 to 4.

6. Method for producing a rope crossing according to one of the claims 1 to 4, wherein a first rope line (20) is a guided through the ring (10) so as to form a first bulge (21) arranged on a first side of the ring (16), and wherein a second rope line (30) is guided along the first side of the ring (16) encompassed or configured to be encompassed by the first bulge (21), and wherein the ring (10) and the first bulge (21) approach each other when the second rope line (30) is encompassed by the first bulge (21), until a point of contact of the rope lines (50) with one another is essentially in the plane of the ring (18).

7. Method for producing a rope crossing according to claim 6, wherein the second rope line (30) is threaded through the first bulge (21) so as to be encompassed by the first bulge (21), before the ring (10) and the first bulge (21) approach each other.

8. Method for producing a rope crossing according to one of the claims 6 and 7, wherein the approach between the ring (10) and the first bulge (21) is attained by applying a pressing force (84) an the first bulge (21).

9. Method for producing a rope crossing according to one of the claims 6 to 8, wherein at least one receiving region (13) of the ring (10) is compressed in the plane of the ring (18), thereby producing plastic deformation and reducing the unobstructed width LW.

10. Apparatus for producing a rope crossing according to one of the claims 1 to 4, comprising:
- a receiving device (63) for non-positively and/or positively securing a ring (10) in at least one translational degree of freedom (60),
- a first force-exerting device (70) which can be brought mechanically into operative connection with a bulge of a rope line and with which a first translational movement of the bulge (61) can be generated such that the apex (40) of the bulge moves away from the ring (10), wherein the rope line segments (22, 32) abutting the bulge extend through the ring,
- a second force-exerting device (80) which can be brought mechanically into operative connection with a bulge of a rope line and with which a second translational movement of the bulge (61) can be generated such that the apex (40) of the bulge approaches the ring (10).

11. Apparatus for producing a rope crossing according to claim 10, wherein the first force-exerting device is a hook (70) which is mechanically connected with a pulling device (71).

12. Apparatus for producing a rope crossing according to one of the claims 9 to 11, wherein the second force-exerting device is a punch (80) which is mechanically connected with a pressure device (81).

13. Apparatus for producing a rope crossing according to one of the claims 11 and 12, wherein the pulling device (71) and/or the pressure device (81) is a spindle drive.

14. Apparatus for producing a rope crossing according to one of the claims 12 and 13, wherein the hook (70) is arranged on the punch (80) and can be removed from a position suitable for pulling the rope line.

15. Apparatus for producing a rope crossing according to one of the claims 9 to 14, comprising at least one drive motor for driving the first and/or the second force-exerting device.

## Revendications

1. Croisement de cordes pour la fixation de brins de corde les uns aux autres, comprenant au moins deux brins de corde (20, 30) qui se croisent et un anneau (10), l'anneau (10) présentant un orifice intérieur (12) qui, par rapport au nombre des brins de corde à fixer, comprend un nombre double de zones de réception (13) placées sensiblement dans le sens radial, et respectivement un segment de brin d'un brin de corde (20, 30) constituant une anse (21, 31) étant reçu dans respectivement deux zones de réception (13) opposées de sorte que les anses (21, 31) de brins de corde se croisant sont disposées sur respectivement des côtés opposés de l'anneau (10),
**caractérisé en ce que**
le rapport de l'ouverture libre LW d'une zone de réception au diamètre du brin de corde D qui constitue l'anse (21, 31) dans cette zone de réception, LW/D = 0,8 à 0,98.

2. Croisement de cordes selon la revendication 1, dans lequel le rapport de l'ouverture libre LW d'un évidement au diamètre du brin de corde D qui constitue l'anse (21, 31) dans cet évidement, LW/D = 0,9 à 0,92.

3. Croisement de cordes selon la revendication 1 ou 2, dans lequel les brins de corde (20, 30) se croisent sensiblement au centre de l'anneau (10) et dans le plan de l'anneau (18).

4. Croisement de cordes selon une des revendications précédentes, dans lequel les brins de corde (20, 30) présentent respectivement une fraction métallique.

5. Appareil de jeu à cordes, en particulier un appareil d'escalade avec corde, comprenant au moins un croisement de cordes (1) selon au moins une des revendications 1 à 4.

6. Procédé de fabrication d'un croisement de cordes selon une des revendications 1 à 4, dans lequel un premier brin de corde (20) est introduit à travers l'anneau (10) de sorte qu'il constitue une première anse (21) qui est disposée sur un premier côté de l'anneau (16), et dans lequel un deuxième brin de corde (30) est guidé le long du premier côté de l'anneau (16) de sorte qu'il est entouré ou peut être entouré par la première anse (21) et, quand le deuxième brin de corde (30) est entouré par la première anse (21), l'anneau (10) et la première anse (21) sont rapprochés l'un de l'autre jusqu'à ce qu'un point de l'appui des brins de corde (50) l'un contre l'autre se trouve sensiblement dans le plan de l'anneau (18).

7. Procédé de fabrication d'un croisement de cordes selon la revendication 6, dans lequel le deuxième brin de corde (30) est enfilé à travers la première anse (21) de sorte qu'il est entouré par la première anse (21) avant que l'anneau (10) et la première anse (21) soient rapprochés l'un de l'autre.

8. Procédé de fabrication d'un croisement de cordes selon une des revendications 6 et 7, dans lequel le rapprochement de l'anneau (10) et de la première anse (21) est réalisé par l'action d'une force de pression (84) sur la première anse (21).

9. Procédé de fabrication d'un croisement de cordes selon une des revendications 6 à 8, dans lequel au moins une zone de réception (13) de l'anneau (10) est comprimée dans le plan de l'anneau (18) de sorte qu'une déformation plastique est produite et que l'ouverture libre LW est réduite.

10. Procédé de fabrication d'un croisement de cordes selon une des revendications 1 à 4, comprenant :
- un dispositif de réception (63) pour la fixation par liaison de force et/ou de forme d'un anneau (10) dans au moins un degré de liberté (60) de translation,
- un premier dispositif (70) qui exerce une force et qui peut être amené mécaniquement en lien opératoire avec une anse d'un brin de corde, et avec lequel un premier mouvement de translation de l'anse (61) peut être produit de sorte que le point culminant (40) de l'anse s'éloigne de l'anneau (10), les segments de brin de corde (22, 32) qui se raccordent à l'anse traversant l'anneau,
- un deuxième dispositif (80) qui exerce une force et qui peut être amené mécaniquement en lien opératoire avec l'anse du brin de corde et avec lequel un deuxième mouvement de translation de l'anse (62) peut être produit de sorte que le point culminant(40) de l'anse se rapproche de l'anneau (10).

11. Procédé de fabrication d'un croisement de cordes selon la revendication 10, dans lequel premier dispositif qui exerce une force est un crochet (70) qui est raccordé mécaniquement à un dispositif de traction (71).

12. Procédé de fabrication d'un croisement de cordes selon une des revendications 9 à 11, dans lequel le deuxième dispositif qui exerce une force est un poinçon (80) qui est raccordé mécaniquement à un dispositif de pression (81).

13. Procédé de fabrication d'un croisement de cordes selon une des revendications 11 et 12, dans lequel le dispositif de traction (71) et/ou le dispositif de pression (81) est un mécanisme à broche.

14. Procédé de fabrication d'un croisement de cordes selon une des revendications 12 et 13, dans lequel le crochet (70) est disposé sur le poinçon (80) et peut être éloigné d'une position appropriée pour la traction du brin de corde.

15. Procédé de fabrication d'un croisement de cordes selon une des revendications 9 à 14, qui présente au moins un moteur d'entraînement pour l'entraînement du premier et/ou du deuxième dispositif qui exerce une force.
